Europäisches Patentamt

European Patent Office

Office européen des brevets

(19)

(11) Publication number: **0 151 417**

**A1**

(12) # EUROPEAN PATENT APPLICATION

(21) Application number: **85100512.4**

(22) Date of filing: **18.01.85**

(51) Int. Cl.⁴: **G 05 B 19/18**
**B 25 J 13/08**

(30) Priority: **19.01.84 JP 6364/84**
**19.01.84 JP 6365/84**
**30.01.84 JP 13305/84**

(43) Date of publication of application:
**14.08.85 Bulletin 85/33**

(84) Designated Contracting States:
**DE FR GB IT**

(71) Applicant: **HITACHI, LTD.**
**6, Kanda Surugadai 4-chome Chiyoda-ku**
**Tokyo 100(JP)**

(72) Inventor: **Okada, Takushi**
**2-605, Gumisawahigashi Haitsu 1154, Gumisawacho**
**Totsuka-ku Yokohama(JP)**

(72) Inventor: **Sugimoto, Koichi**
**6-304, Wakamiya-Haitsu 760-1, Yamashita**
**Hiratsuka-shi(JP)**

(72) Inventor: **Sakaue, Shiyuki**
**Keimeiryo, 850, Maiokacho**
**Totsuka-ku Yokohama(JP)**

(72) Inventor: **Hata, Seiji**
**20-10, Jonan-1-chome**
**Fujisawa-shi(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **Method for correcting systems of coordinates in a robot having visual sensor device and apparatus therefor.**

(57) The co-ordinates system correction apparatus, incorporated in a robot system having a visual sensor for measuring two or three dimensional position and posture data, corrects a visual sensor co-ordinates system and a robot co-ordinates systems. The apparatus corrects the co-ordinates systems by means of a correction of parameters representing a relationship between the co-ordinates systems. The parameter correction is caused by calculating parameter errors from a deviation between calculated position and posture data and measured position and posture data.

EP 0 151 417 A1

./...

FIG. 7

| | | |
|---|---|---|
| IMAGE INPUT (1, 102) | MOVE ROBOT TO A DESIRED POSITION $\overline{X}$ AND POSTURE $\overline{f}$ (7, 101) | |
| MEASURE POSITION $\overline{X}''$ AND POSTURE $\overline{f}''$ OF ROBOT VIEWED FROM STATIONARY SENSOR (8, 103) | | OBTAIN CALCULATED POSITION $\overline{X}'$ AND POSTURE $\overline{f}'$ OF ROBOT IN STATIONARY SENSOR CO-ORDINATES SYSTEM (9, 104) |
| | CORRECT PARAMETERS ON THE BASIS OF CALCULATED PARAMETER ERRORS (106) | CALCULATE PARAMETER ERRORS FROM DEVIATIONS BETWEEN $\overline{X}'$ AND $\overline{X}''$, AND BETWEEN $\overline{f}'$ AND $\overline{f}''$ (105) |

## METHOD FOR CORRECTING SYSTEMS OF COORDINATES

## IN A ROBOT HAVING VISUAL SENSOR DEVICE

## AND APPARATUS THEREFOR

BACKGROUND OF THE INVENTION

FIELD OF THE INVENTION

The present invention relates to a control means for a robot having a visual sensor device for measuring a position and posture of an object in a two- or three-dimension, and more particularly to a co-ordinates system correction method and apparatus in which deviations between a visual co-ordinates system and a robot co-ordinates system are corrected whereby the operation of the robot with the visual sensor device may be carried out with high accuracy.

DESCRIPTION OF THE PRIOR ART

In general, environmental data from a visual sensor are defined by a proper co-ordinates system fixed to the visual sensor. This is because the position and posture of an object are detected as the position and posture of the object in the proper co-ordinates system fixed to the visual sensor. For instance, Japanese Patent Publication No. 36374/75 discloses a method for measuring a position of an object by using a television camera in a triangular surveying manner. Also, in this case, the position of the object is known by using a co-ordinates system related to the television camera in accordance with the obtained video signals.

On the other hand, it is convenient for carrying out various works that the robot works are defined by the movements of a tool mounted on a wrist of the robot. Therefore, it is desirable that the movement of the tool is defined in a proper co-ordinates system fixed to the wrist.

Also, in the case where characteristics of the robot per se, such as, for example, a speed command value of the robot are desired to be calculated on the basis of the co-ordinates system proper to the robot body.

Thus, it is desirable to use the co-ordinates systems proper to the wrist and the body of the robot and the visual sensor, respectively, in order to control the operations of the wrist, the body and the visual sensor. However, in the prior art, almost no attempt has been made to adopt the respective co-ordinate systems.

Thus, in the conventional robot control system, the respective co-ordinates systems have not been used. Therefore, the most preferable co-ordinates system has not always been used for the respective structural components.

In this connection, in the conventional robot system having a visual sensor, specific data types corresponding to the respective visual sensor components have been used whereby the data are represented to variously drive the robot. Therefore, it is necessary to provide various data types for the various visual sensor components and prepare various soft wares for driving the robot. Namely, if, for example, the co-ordinates system for the visual sensor device is solely used, even if the same robot body and wrist are used, it is necessary to reform the overall data system for the co-ordinates system of the visual sensor device. Further, in the prior art, the specific data system for the various visual sensor units is used. As a result, upon controlling the robot, such a difficulty would be encountered that a command signal for the sensor feedback control in a standardized manner with the robot language is given.

Also, in the prior art, in the case where the robot is operated by use of the visual sensor, a planar binary or multivalue image is recognized by the visual sensor and the handling is carried out in accordance with such a recognition. Therefore, it is only possible to handle a planar object having a constant posture. At this time, it is sufficient to consider the parallel movement on a plane and the rotation in the plane as errors between the co-ordinates system of the robot and the co-ordinates system of the visual sensor as shown in USP 3,986,007, and it is relatively easy to correct the co-ordinates system. Such a correction is carried out in a recent planar visual sensor device which is available on the market. However, as the handling operation of the robot is increased and a object having complicated shape must be handled, it becomes necessary to recognize a three-dimensional object having a non-fixed position and posture as well as a planar object. In order to meet

0151417

this requirement, there has been proposed a three-dimensional recognition method using a dual visual sensor or distant image. In such a three-dimensional visual sensor, it is necessary to correct spacial errors between the co-ordinates systems of the robot and of the visual sensor. However, such a technique has never been proposed or realized.

SUMMARY OF THE INVENTION

An object of the present invention to provide a co-ordinates system correction method capable of effectively utilizing data from a visual sensor means by using the respective co-ordinates systems for the respective structural components and an apparatus for carrying out the same.

Another object of the invention is to provide a co-ordinates system correction apparatus capable of readily coping with the position change of the visual sensor device and/or with the replacement of the visual sensor device.

Still another object of the invention is to provide a co-ordinates system correction method and apparatus capable of obtaining with ease and high accuracy a spacial relationship between the visual sensor co-ordinates system and at least one of the co-ordinates systems of the robot body and the robot hand.

In order to attain the above-mentioned objects, according to the invention there is provided a co-ordinates system correction apparatus in which a co-ordinates system is setted in at least one of robot body and a robot hand, the apparatus comprising visual sensor means to which a proper co-ordinates system is setted, means for detecting a position and/or posture of the object in the co-ordinate system in the visual sensor means, and parameter storing means for storing parameters determining a relationship between the co-ordinates system of the visual sensor means and at least one of the co-ordinates systems of the robot body and the robot hand, wherein by using the co-ordinates transformation parameters, the position and/or posture of the object in the co-ordinates system of the visual sensor means are transformed into one in the co-ordinates system of the robot hand and/or the co-ordinates system of the robot body, or transformed into one in the co-ordinates system of the robot body and further transformed into one in the co-ordinates system of the robot body.

According to the present invention, transformation parameters are established in the three co-ordinates systems of the visual sensor means, the robot hand, and the robot body (or in the two co-ordinates systems if the co-ordinates systems of the robot hand and the robot body are the same), so that the environmental data in the proper co-ordinates system established in the visual sensor means may be used in other co-ordinates system. Therefore, it is advantageous that the respective co-ordinates systems may be used for the respective structural components. In addition, the environmental data obtained from the visual sensor means may be effectively used.

According to another aspect of the invention, a plural kinds of the co-ordinates transformation parameters are set and stored in the storing means whereby even if the visual sensor means is replaced by another visual one, the co-ordinates transformation parameters corresponding thereto may be assigned. In accordance with the specific embodiment, since plural kinds of transformation parameters are prepared, any parameter may be assigned corresponding to the various visual sensor means. Such a various correspondence to the various kinds of visual sensor means is actually available. It is necessary to fix the visual sensor means anywhere in the robot body. However, the visual sensor means is not limited to a single visual sensor means, and it is general that the position where the visual sensor means is fixed is different in accordance with an object to be handled. Therefore, it is necessary to install the visual sensor means to a different position in accordance with the respective mounting positions and to use different visual sensor means. It is therefore preferable to assign the corresponding parameters in accordance with the respective positions. As in the embodiment of the invention, if plural kinds of parameters are stored, when the visual sensor means is replaced by new one or changed in its position, it is possible to assigne the parameters corresponding to the changes. This is very convenient.

Also, it is necessary to measure the position and posture of the object and direct the robot hand to the posture direction in order to handle the object in any position and posture. To meet this requirement, it is necessary to accurately correct a deviation of the visual sensor co-ordinates system for measuring the position and posture of the object from the robot body or robot hand co-ordinates system in accordance with the parameters. By the way, even if the robot is moved in accordance with the position and posture information measured by the visual sensor device, the robot is moved to a position and posture deviated from the practical position and posture of the object. Therefore, by utilizing this feature inversely, in the robot body and/ or robot hand co-ordinates systems, the position and posture of the object known in advance are measured by the visual sensor means, and it is possible to obtain the parameters giving a relationship between the robot visual sensor and the robot body or hand co-ordinates systems from the errors between the measured values and the calculated values. In accordance with the present invention, by using the parameters in this manner, the correction between the robot body or hand co-ordinates system and the visual sensor co-ordinates system may be attained.

BRIEF DESCRIPTION OF THE DRAWINGS

Fig. 1 is a schematic view showing a robot system to which one embodiment of the invention is applied;

Fig. 2 is a perspective view showing a co-ordinates system of a visual sensor shown in Fig. 1;

Fig. 3 is a perspective view showing a co-ordinates system fixed to the object shown in Fig. 2;

Fig. 4 is a schematic view illustrating a robot system to which a three-dimensional stationary visual sensor device is fixed;

Figs. 5 and 6 are views showing a relationship between the robot co-ordinates system and the stationary visual sensor co-ordinates system;

Fig. 7 is a block diagram showing the functions of the components of the system shown in Fig. 4;

Fig. 8 is a view showing one robot system having a three-dimensional visual sensor;

Fig. 9 is a view showing a relationship between the robot hand co-ordinates system and the robot visual sensor co-ordinates system;

Fig. 10 is a view showing a relationship between the object and the robot hand with a visual sensor; and

Fig. 11 is a block diagram showing the functions of the components of the system shown in Fig. 8.

DETAILED DESCRIPTION OF THE PREFERRED EMBODIMENTS

A preferred embodiment of the invention will now be described with reference to the accompanying drawings.

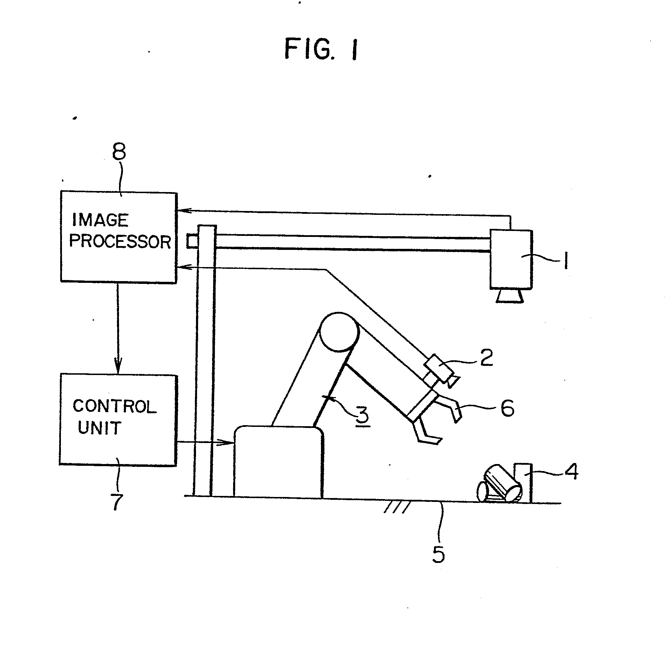

In Fig. 1, there is shown a robot system provided with a co-ordinates system correction device in accordance with the preferred embodiment. Two visual devices 1 and 2 are provided in this robot system. The stationary visual device 1 is secured to a base 5 on which a robot 3 is installed. The wrist visual device 2 is mounted on a wrist portion of the robot 3. The robot system shown has six degrees of freedom in motion.

In this robot system, the visual devices 1 and 2 may detect a position and a posture of an object 4. A co-ordinates system is set in a robot body. More specifically, stationary co-ordinates XYZ is fixed in a stationary portion between the robot 3 and the base 5. Another co-ordinates system is set in the wrist portion of the robot 3 and is, in particular, composed of co-ordinates $x_h y_h z_h$ of a hand 6. On the other hand, proper co-ordinates systems are established for the visual devices 1 and 2, respectively. Namely, a co-ordinates system $x_1 y_1 z_1$ is fixed for the stationary visual device 1 and a co-ordinates system $x_2 y_2 z_2$ is fixed for the wrist visual device 2.

When the object 4 are detected on the basis of the co-ordinates systems $x_1 y_1 z_1$ and $x_2 y_2 z_2$ by the visual devices 1 and 2 through an image processor 8, the data from the visual devices 1 and 2 on the basis of the visual device co-ordinates systems are transformed into the data on the basis of the co-ordinates systems of the robot 3 through parameters giving relationships between the co-ordinates systems of the visual devices 1 and 2, and the stationary co-ordinates XYZ and the co-ordinates $x_h$, $y_h$, $z_h$ of the hand 6. Thus, the data detected by the visual devices 1 and 2 on the basis of their own co-ordinates systems are transformed into the data on the basis of the co-ordinates systems of the robot body and of the wrist of the robot. The robot operates on the basis of such transformed data. In this manner, the structural components can desirably operate on the basis of the respective co-ordinates systems. The above-described parameters are stored in a parameter storing means incorporated in a robot control unit 7.

In this embodiment, a plural sets of parameters are provided and stored in the parameter storing means so as to readily cope with the position changes of the visual devices and/or the replacement of the visual devices.

The construction and the operation of the embodiment will now be described in more detail.

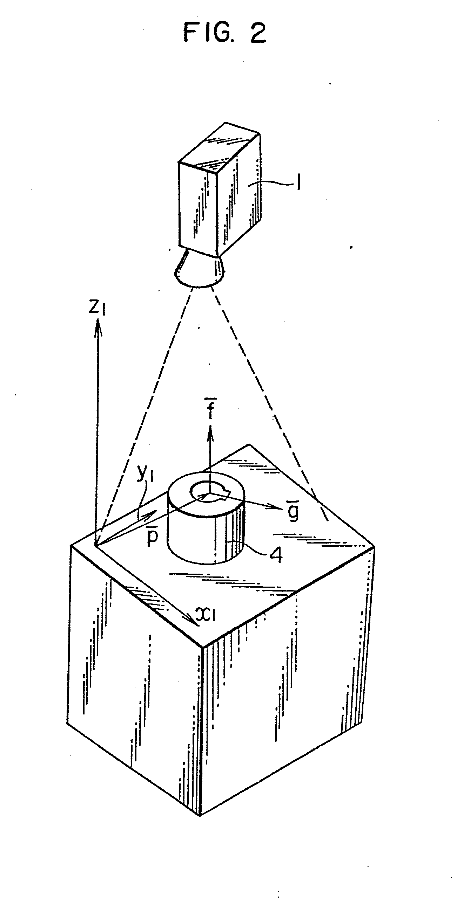

As described above, in this embodiment, a visual sensor system includes two visual devices 1 and 2. The stationary visual device 1 is fixed to the base 5 and the wrist visual device 2 is mounted on the wrist portion of the robot 3. Each of the visual devices is composed of, e.g. a camera having a slit light source. The stationary visual device 1 is a two- or three-dimensional visual sensor and can recognize the position and the posture of the object 4. For instance, if the stationary visual device 1 is a two-dimensional visual sensor, a position $\vec{p}$ of the object 4 in the co-ordinates system fixed to the visual device 1 as shown in Fig. 2 is defined by the components $p_{x1}$, $p_{y1}$, $p_{z1}$ of the $x_1$, $y_1$, $z_1$ axes and is expressed in the following equation (1).

$$\vec{p} = p_{x1} \vec{i}_1 + p_{y1} \vec{j}_1 + p_{z1} \vec{k}_1 \qquad \ldots\ldots (1)$$

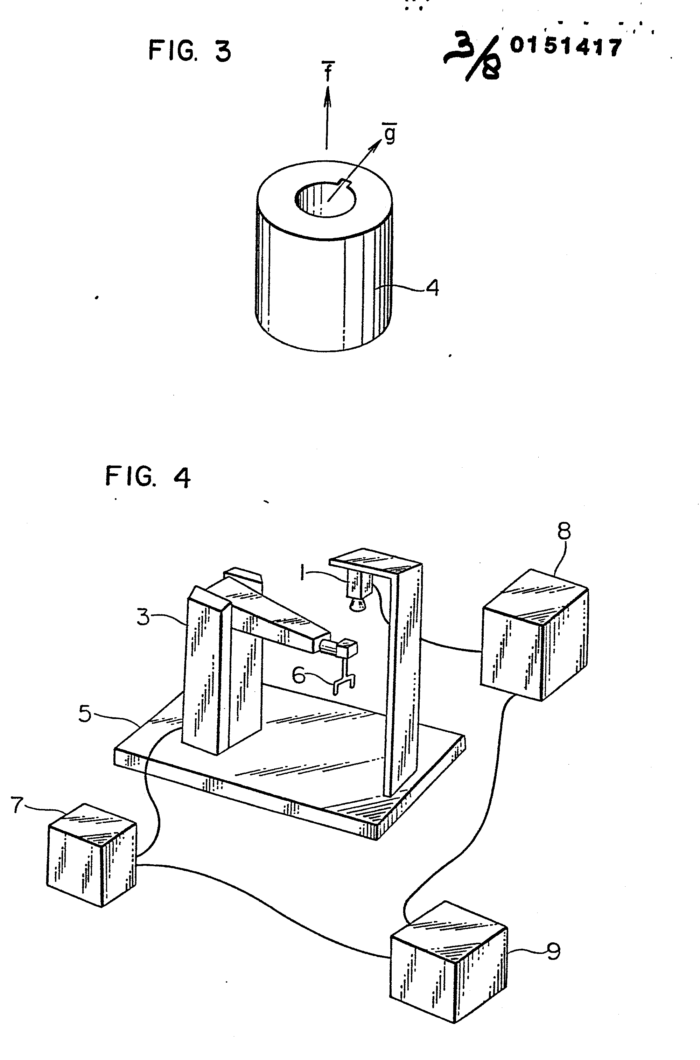

where $\vec{i}_1$, $\vec{j}_1$, and $\vec{k}_1$ are the unit vectors in parallel to the $x_1$, $y_1$ and $z_1$ axes, respectively. When the stationary visual device 1 is the two-dimensional sensor, in general, a direction of the $z_1$ axis is determined by the mounting position of the visual sensor and the component $p_{z1}$ is a constant. On the other hand, the posture of the object 4 is expressed by cosine components of the two axes fixed thereto and intersected at a right angle with each other as shown in Fig. 3. The cosine components are given by unit vectors $\vec{f}$ and $\vec{g}$. When the object 4 shown in Fig. 3 is viewed from above the axis $\vec{f}$ with the two-dimensional visual sensor, the posture is given as follows.

$$\vec{f} = \vec{k}_1 \qquad \ldots\ldots (2)$$

$$\vec{g} = g_{x1} \vec{i}_1 + g_{y1} \vec{j}_1 \qquad \ldots\ldots (3)$$

If the stationary visual device 1 is of the three-dimensional type, it is possible to recognize any positions and postures of the object. In this case, the 9 (nine) parameters of $p_{x1}$, $p_{y1}$, $\cdots$, $g_{y1}$, and $g_{z1}$ in the following equations may be detected.

$$\vec{p} = p_{x1}\,\vec{i}_1 + p_{y1}\,\vec{j}_1 + p_{z1}\,\vec{k}_1 \qquad \cdots \quad (4)$$

$$\vec{f} = f_{x1}\,\vec{i}_1 + f_{y1}\,\vec{j}_1 + f_{z1}\,\vec{k}_1 \qquad \cdots \quad (5)$$

$$\vec{g} = g_{x1}\,\vec{i}_1 + g_{y1}\,\vec{j}_1 + g_{z1}\,\vec{k}_1 \qquad \cdots \quad (6)$$

Since the stationary visual device 1 is fixed to the base 5, the relationship between to co-ordinates system of the stationary visual device 1 and the stationary co-ordinates XYZ is unchangeable a fixed manner, and then the cosine components $(p_X, p_Y, p_Z)$, $(f_X, f_Y, f_Z)$, $(g_X, g_Y, g_Z)$ of $\vec{p}$, $\vec{f}$, $\vec{g}$ in the co-ordinates XYZ are given by the following relationship with using the data from the visual device 1.

$$\begin{pmatrix} 1 & 0 & 0 \\ p_X & f_X & g_X \\ p_Y & f_Y & g_Y \\ p_Z & f_Z & g_Z \end{pmatrix} = A \begin{pmatrix} 1 & 0 & 0 \\ p_{x1} & f_{x1} & g_{x1} \\ p_{y1} & f_{y1} & g_{y1} \\ p_{z1} & f_{z1} & g_{z1} \end{pmatrix} \qquad \cdots \quad (7)$$

where A is a matrix of 4 x 4 and its all elements are constants.

In the same manner, the wrist visual device 2 mounted on the wrist portion of the robot may detect the position and posture components $(p_{x2}, p_{y2}, p_{z2})$, $(f_{x2}, f_{y2}, f_{z2})$, $(g_{x2}, g_{y2}, g_{z2})$ of the object on the basis of the characteristic co-ordinates system $x_2 \, y_2 \, z_2$ fixed in the visual device 2. Since the visual device 2 is fixed to the wrist of the robot, the co-ordinates system of the visual device 2 is in an unchangeable relation with the co-ordinates $x_h$, $y_h$, $z_h$ of the hand 6 also fixed to the wrist portion. The data of the position and posture of the object from the wrist visual device 2 are transformed into the data on the basis of the hand co-ordinates system through the following relationship.

$$
\begin{pmatrix}
1 & 0 & 0 \\
p_{xh} & f_{xh} & g_{xh} \\
p_{yh} & f_{yh} & g_{yh} \\
p_{zh} & f_{zh} & g_{zh}
\end{pmatrix}
= B
\begin{pmatrix}
1 & 0 & 0 \\
p_{x2} & f_{x2} & g_{x2} \\
p_{y2} & f_{y2} & g_{y2} \\
p_{z2} & f_{z2} & g_{z2}
\end{pmatrix}
\quad \dots \ (8)
$$

where $B$ is a matrix of 4 x 4 and its all elements are constants.

As described above, in this embodiment, the relationship between the co-ordinates system $x_1$, $y_1$, $z_1$ of the stationary visual device 1 and the stationary co-ordinates system X Y Z is given by the parameters determined by the matrix A. Also, the relationship between the co-ordinates system $x_2$, $y_2$, $z_2$ of the wrist visual device 2 and the co-ordinates system $x_h$, $y_h$, $z_h$

of the hand 6 is given by the parameters determined by the matrix B. Therefore, the data which the visual devices 1 and 2 recognize with their own co-ordinates systems, respectively, are transformed into the data on basis of the co-ordinates systems of the robot 3 and the hand 6 fixed to the wrist of the robot 3 through the above-described parameters. The robot operates on such transformed data. These parameters are stored in the parameter storing means of the robot control unit 7.

The embodied apparatus with such a construction will operate as follows with respect of the control of the robot.

For instance, when it is assumed that the hand 6 of the robot is controlled to be positioned in the same place as the position and the posture of the object are recognized by the visual sensors. In this case, it is preferable that the position and posture $\vec{p}$, $\vec{f}$, $\vec{g}$ of the hand 6 be given by the stationary co-ordinates system. Therefore, when the stationary visual device 1 is used, the data from the visual device 1 are multiplied by the matrix A of parameter and are transformed into the data on the stationary co-ordinates. This makes it possible to control the hand 6 by means of usage of such transformed data. When the wrist visual device 2 is used, in the same manner, the data from the visual device 2 is used, in the same manner, the data from the visual device 2 are multiplied by the matrix B of parameter and are transformed into the data on the hand co-ordinates system. In this case, the transformed data may be further transformed into the data on the stationary co-ordinates system by using another parameters. These another parameters may be expressed by a matrix C, the matrix C is of 4 x 4 type and its elements are functions of 6 (six) displacements of a kinematic pair $\theta_1$, $\theta_2$, $\cdots$, $\theta_6$, i.e. $c_{ij} = f_{ij}$ ($\theta_1$, $\theta_2$, $\cdots$, $\theta_6$). From the values of $\vec{p}$, $\vec{f}$ and $\vec{g}$ thus transformed into the stationary co-ordinates system, the displacements of the kinematic pair $\theta_{1f}$, $\theta_{2f}$, $\cdots$, $\theta_{6f}$ are calculated, each of which corresponds to the respective transformed values. Then, an actuator for driving the kinematic pair is controlled so that each dispacement of the respective pairing elements becomes the corresponding calculated value.

An explanation has been made as to the example of a robot system having two visual sensors. However, any number of the visual sensors may be used as far as parameters determining a relationship between the co-ordinates fixed to each visual sensor and the robot co-ordinates are defined. In this case, if the visual sensors are numbered and then the number of a desired visual sensor is called out by a robot language or the like, the control unit 7 generates a drive signal to the desired visual sensor. Then, the data from visual sensors are multiplied by a matrix (parameters) stored in advance and corresponding to the called visual sensor, so that the data for controlling the robot may be obtained.

As described above, in the co-ordinates system correction apparatus in accordance with this embodiment, since the visual devices 1 and 2 are provided with the respective co-ordinates system therefor and the relationships between the sensor co-ordinates systems and the robot co-ordinates systems are determined by the matrixes, the same drive soft ware may control the robot in accordance with each signal of the sensors even for the robot system having a plurality of visual sensors. Therefore, it is possible to standardize the drive soft ware. Also, if the matrices each corresponding to the respective sensors are stored in the control unit 7 in advance, it is possible to carry out the feedback control of the robot simply by calling the desired sensor number in terms of the robot language. A complicated robot language command may not be required. Further, if the parameters for data transformation are represented in a matrix form, it is possible to attain a high speed calculation through an array processor. If the matrix is simple, it is of course possible to make the data transformation through a particular sub-routine.

In the preceding embodiments, although there is not shown a specific method for obtaining the transformation matrixes A or B in the case where the visual device 1 or 2 is of a three-dimensional visual sensor type, the co-ordinates system correction apparatus in accordance with the present invention may be used for that case. A method for obtaining the matrix A will now be described in accordance with another embodiment.

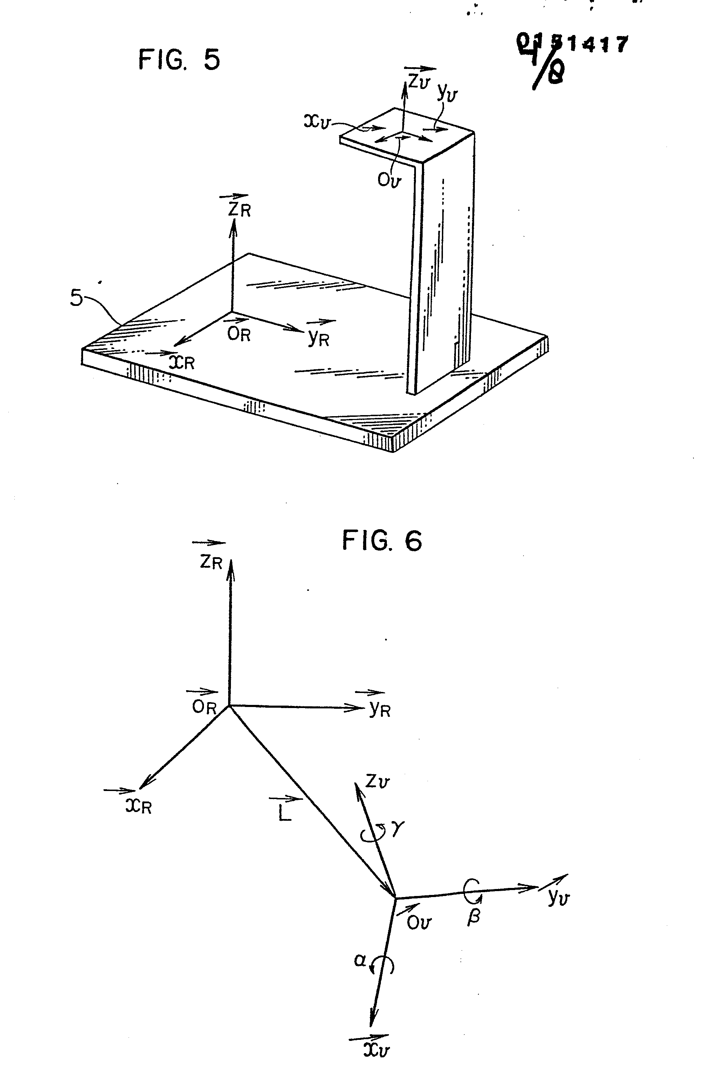

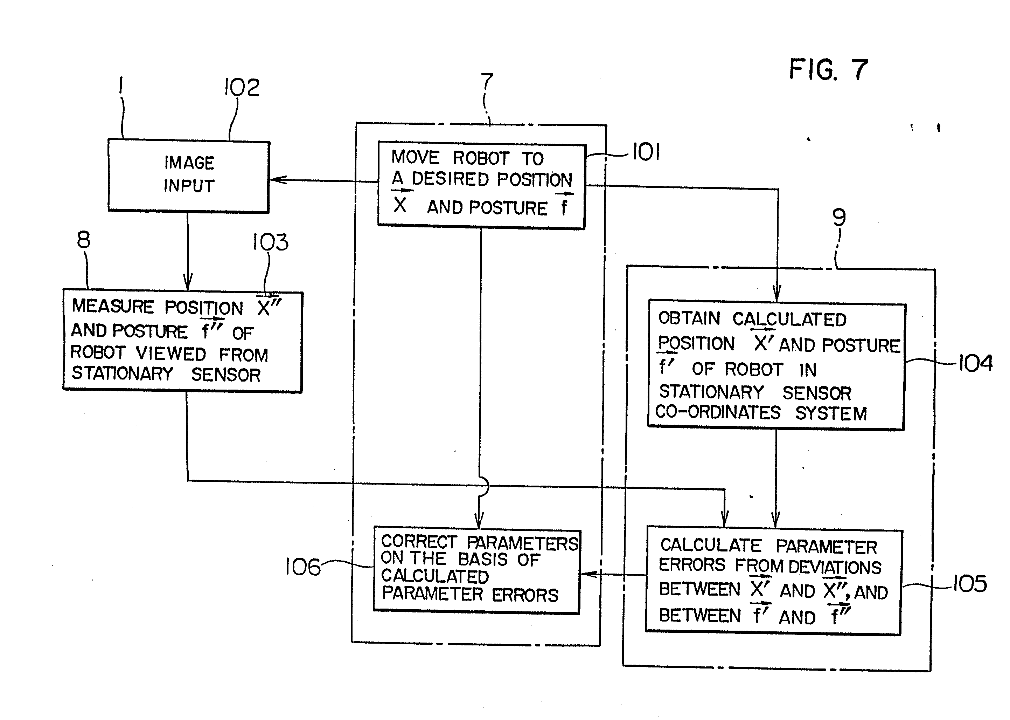

Fig. 4 is an illustration of one embodiment showing a parameter measuring method in relation to a three-dimensional visual sensor. Fig. 5 is a schematic view showing a relationship between the robot and the stationary visual sensor. Fig. 6 shows a relationship between the co-ordinates systems of the robot and the stationary visual sensor. Fig. 7 is a block diagram illustrating functions of components of the embodiment shown in Fig. 4.

In these figures, a reference numeral 1 designates a stationary visual device or sensor fixedly mounted onto a base 5 on which a robot 3 is installed. The robot 3 is provided at a distal end portion thereof with a hand 6. The stationary visual device 1 and the robot 3 are associated with a robot control unit 8, an image processor 8, and a parameter calculator 9.

It is assumed, as shown in Fig. 5 that the $\vec{O}_R$ is an origin of the robot co-ordinates system comprising the axes of $\vec{x}_R$, $\vec{y}_R$ and $\vec{z}_R$, and the $\vec{O}_v$ is an origin of the stationary visual sensor co-ordinates system comprising the axes of $\vec{x}_v$, $\vec{y}_v$ and $\vec{z}_v$, the relationship between the robot co-ordinates system and the stationary visual sensor co-ordinates system may be expressed by the following equations:

$$\vec{O}_v = \vec{O}_R + L_x \vec{x}_v + L_y \vec{y}_v + L_z \vec{z}_v$$

$$= \vec{O}_R + \vec{L} \begin{bmatrix} \vec{x}_v \\ \vec{y}_v \\ \vec{z}_v \end{bmatrix} \qquad \ldots (9)$$

$$
\begin{bmatrix} \vec{x}_v \\ \vec{y}_v \\ \vec{z}_v \end{bmatrix} = M_\gamma \, M_\beta \, M_\alpha \begin{bmatrix} \vec{x}_R \\ \vec{y}_R \\ \vec{z}_R \end{bmatrix} = M \begin{bmatrix} \vec{x}_R \\ \vec{y}_R \\ \vec{z}_R \end{bmatrix} \quad \dots \ (10)
$$

where $\vec{L} = (L_x, L_y, L_z)$ is a vector representing the displacement from the origin $\vec{O}_R$ of the robot co-ordinates system to the origin $\vec{O}_v$ of the stationary visual sensor co-ordinates system, and $M_\gamma$, $M_\beta$, and $M_\alpha$ are matrixes representing the three rotational displacements between the co-ordinate systems. These matrixes are expressed as follows, when angles of rotation $\alpha$, $\beta$, and $\gamma$ are selected as shown in Fig. 6:

$$
M_\alpha = \begin{bmatrix} 1 & 0 & 0 \\ 0 & \cos\alpha & \sin\alpha \\ 0 & -\sin\alpha & \cos\alpha \end{bmatrix} , \quad M_\beta = \begin{bmatrix} \cos\beta & 0 & -\sin\beta \\ 0 & 1 & 0 \\ \sin\beta & 0 & \cos\beta \end{bmatrix} ,
$$

$$
M_\gamma = \begin{bmatrix} \cos\gamma & \sin\gamma & 0 \\ -\sin\gamma & \cos\gamma & 0 \\ 0 & 0 & 1 \end{bmatrix} \quad \dots \ (11)
$$

The robot control unit 7 commands the robot 3 to move to the position $\vec{X} = (x, y, z)$ and posture $\vec{f} = (f_x, f_y, f_z)$ in terms of the robot co-ordinates system. If the parameters $L_x$, $L_y$, $L_z$, $\alpha$, $\beta$, and $\gamma$ are the same values as the designed one and include no error, the robot must be moved to the following points:

$$\vec{X} = x\, \vec{x}_R + y\, \vec{y}_R + z\, \vec{z}_R + \vec{O}_R \qquad \dots\ (12)$$

$$\vec{f} = f_x\, \vec{x}_R + f_y\, \vec{y}_R + f_z\, \vec{z}_R \qquad \dots\ (13)$$

To the contrary, in case that these position and the posture are calculated with using the data from the stationary visual sensor 1 and the calculated position and posture are expressed as $\vec{X}' = (x', y', z')$, $\vec{f}' = (f_{x'}, f_{y'}, f_{z'})$.

$$\vec{X}' = x'\, \vec{x}_v + y'\, \vec{y}_v + z'\, \vec{z}_v + \vec{O}_v \qquad \dots\ (14)$$

$$\vec{f}' = f_{z'}\, \vec{x}_v + f_{y'}\, \vec{y}_v + f_{z'}\, \vec{z}_v \qquad \dots\ (15)$$

The relationships between x, y, z and x', y', z', and between $f_x$, $f_y$, $f_z$ and $f_{x'}$, $f_{y'}$, $f_{z'}$ are determined from the equations (9) to (11).

However, if the stationary visual sensor 1 is not accurately mounted on the predetermined portion of the robot system, the errors are expressed as $\Delta L_x$ of $L_x$, $\Delta L_y$, $\Delta L_z$, $\Delta\alpha$, $\Delta\beta$, and $\Delta\gamma$. In this case, the parameters in the equations (9) to (11) become $(L_x + \Delta L_x)$, $(\alpha + \Delta\alpha)$ and the like. Therefore, even if the robot is commanded to move to $\vec{X} = (x, y, z)$, $\vec{f} = (f_x, f_y, f_z)$, the robot can not reside in the position and posture $\vec{X}' = (x', y', z')$, $\vec{f}' = (f_{x'}, f_{y'}, f_{z'})$ but in $\vec{X}'' = (x'', y'', z'')$, $\vec{f}'' = (f_{x''}, f_{y''}, f_{z''})$ which are deviated from $\vec{X}'$, $\vec{f}'$. Therefore, if the respective deviations between x', y',

$z'$ and $x"$, $y"$, $z"$, and between $f_{x'}$, $f_{y'}$, $f_{z'}$ and $f_{x"}$, $f_{y"}$, $f_{z"}$ are measured, $\Delta L_x$, $\Delta L_y$, $\Delta L_z$, $\Delta\alpha$, $\Delta\beta$, $\Delta\gamma$ may be obtained from the equations (9) to (11).

The construction and operation of the embodiment shown in Fig. 4 will now be described with reference to Fig. 7.

The robot 3 is moved in accordance with the position and posture command vectors $\vec{X}$, $\vec{f}$ from the robot control unit 7 (step 101). The stationary visual sensor 1 picks up an image of the robot 3 after the movement thereof and feed the image information to the image processor 8 (step 102). The position and posture $\vec{X}"$, $\vec{f}"$ of the robot 3 as viewed from the stationary visual sensor 1 are measured in the image processor 8 (step 103). On the other hand, the parameter calculator 9 calculates the position and posture $\vec{X}'$, $\vec{f}'$ (equations (14) and (15)) in the stationary visual co-ordinates system by using the equations (9), (10) and (11) on the basis of the command signals or vectors $\vec{X}$, $\vec{f}$ from the robot control unit 7 (step 104). If the stationary visual sensor 1 is accurately mounted on the predetermined portion of the robot system, the position $\vec{X}''$ and posture $\vec{f}''$ of the robot measured by the stationary sensor 1 coinside with the calculated position $\vec{X}'$ and posture $\vec{f}'$ of the robot. To the contrary, if the stationary sensor 1 is not accurately mounted on the predetermined portion of the robot system, the measured position $\vec{X}''$ and posture $\vec{f}''$ are deviated from the calculated position $\vec{X}'$ and posture

- 21 -

0151417

$\vec{f}'$ by some deviations caused by such unaccurate mounting of the robot. Namely, the measured position $\vec{X}''$ and posture $\vec{f}''$ have the deviations from the practical position and posture of the robot, which are caused by the parameter errors, e.g. $\Delta L_x$. Accordingly, the correct parameters may be obtained from the respective deviations between $\vec{X}'$ and $\vec{X}''$, and between $\vec{f}'$ and $\vec{f}''$ (steps 105, 106).

Also, in the above-described measurement of the parameters, even if the visual device is fixed to the wrist of the robot as the visual sensor 2, the matrix B may be obtained in the same manner.

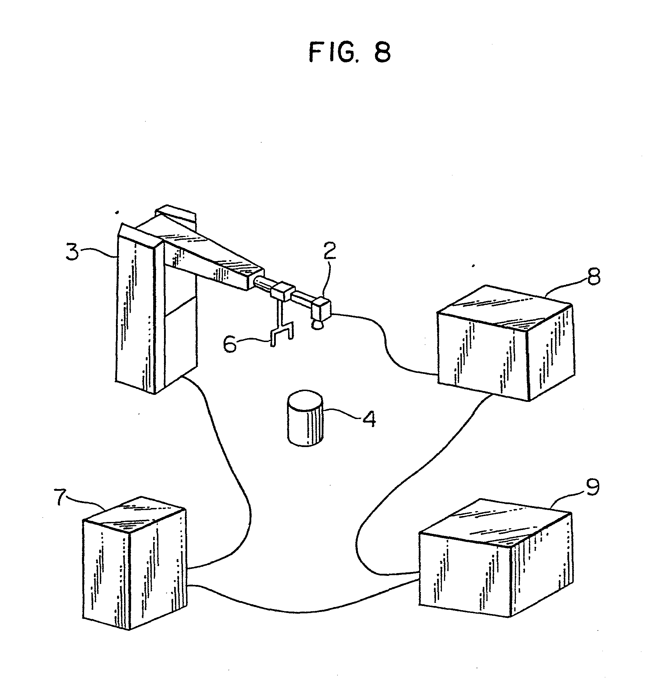

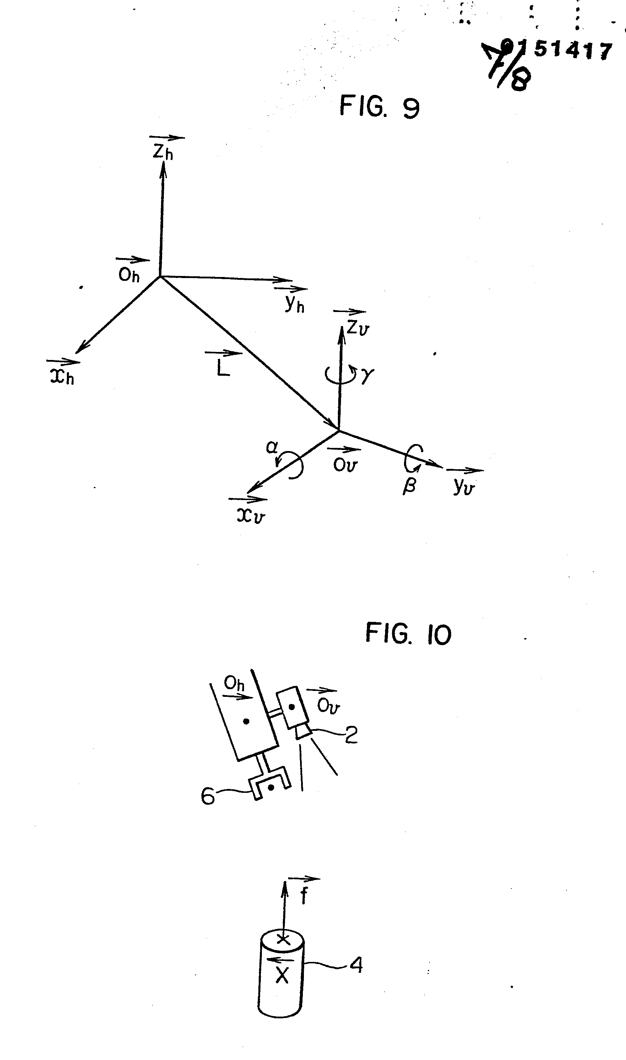

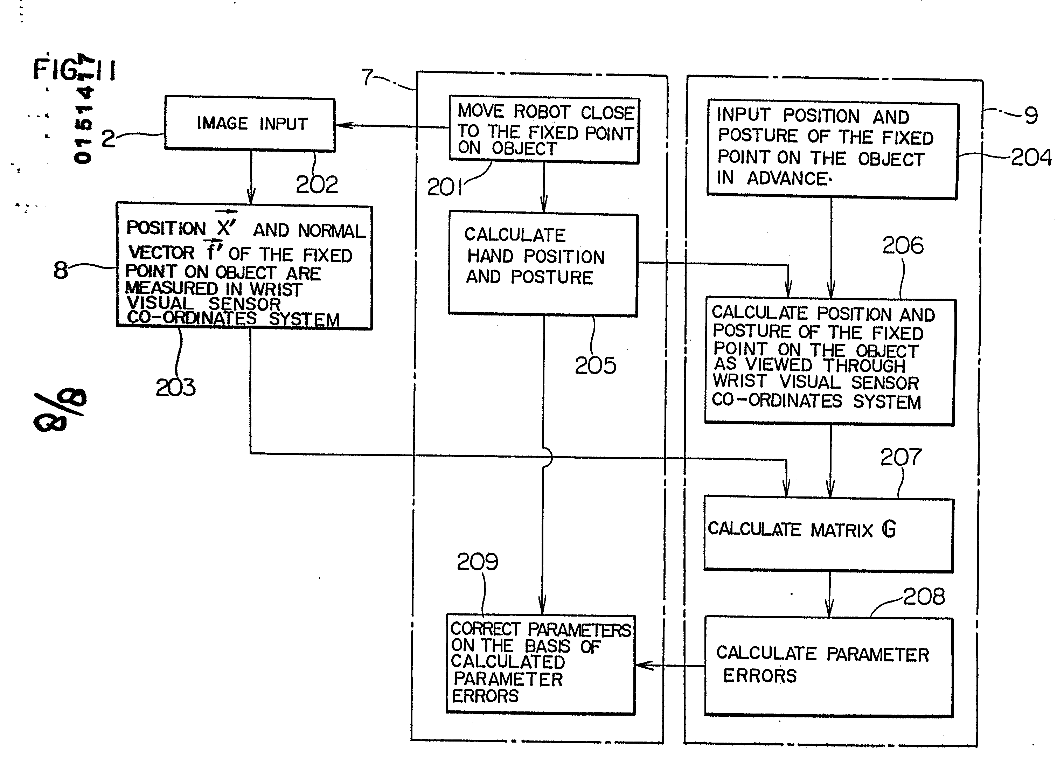

Fig. 8 is a schematic view illustrating one embodiment of a robot system having a three-dimensional movable visual sensor, Fig. 9 shows the relationship between the robot hand co-ordinates system and the robot visual sensor co-ordinates system, Fig. 10 shows the relationship between the object and the robot hand with the visual sensor more specifically, and Fig. 11 is a block diagram showing the functions of the components of the system shown in Fig. 8.

In these figures, a reference numeral 2 designates a wrist visual sensor mounted on a distal end portion of the robot for sensing an object 4 to be measured. The other elements and components are the same as shown in Fig. 4.

As shown in Fig. 9, the parameters to be used upon mounting the robot wrist visual sensor 2 on the robot wrist include 6 (six) parameters such as a vector $\vec{L} = (L_x, L_y, L_z)$ representing a displacement between the origin $\vec{O}_h$ of the robot hand co-ordinates system and the origin $\vec{O}_v$ of the robot wrist visual sensor co-ordinates system, and angles of rotation $\alpha$, $\beta$, $\gamma$ representing the respective rotational displacement between the corresponding axes of the co-ordinates systems. In this case, the relationships between the origin $\vec{O}_h$ of the robot hand co-ordinates system and the origin $\vec{O}_v$ of the wrist visual sensor co-ordinates system, and between the axes $\vec{x}_h$, $\vec{y}_h$, $\vec{z}_h$ of the robot hand co-ordinates system and the axes $\vec{x}_v$, $\vec{y}_v$, $\vec{z}_v$ of the wrist visual sensor co-ordinates system are represented by the following equations:

$$\vec{O}_v = \vec{O}_h + L_x \vec{x}_h + L_y \vec{y}_h + L_z \vec{z}_h \qquad \text{.... (16)}$$

$$\begin{bmatrix} \vec{x}_v \\ \vec{y}_v \\ \vec{z}_v \end{bmatrix} = M_\gamma M_\beta M_\alpha \begin{bmatrix} \vec{x}_h \\ \vec{y}_h \\ \vec{z}_h \end{bmatrix} = M \begin{bmatrix} \vec{x}_h \\ \vec{y}_h \\ \vec{z}_h \end{bmatrix} , \quad M = M_\gamma M_\beta M_\alpha$$

$$\text{.... (17)}$$

where $M_\alpha$, $M_\beta$ and $M_\gamma$ are the 3x3 matrixes representing the rotations about $\vec{x}_h$, $\vec{y}_h$ and $\vec{z}_h$, respectively, and are given as follows:

$$M_\alpha = \begin{bmatrix} 1 & 0 & 0 \\ 0 & \cos\alpha & \sin\alpha \\ 0 & -\sin\alpha & \cos\alpha \end{bmatrix} ,$$

0151417

$$M_\beta = \begin{bmatrix} \cos\beta & 0 & -\sin\beta \\ 0 & 1 & 0 \\ \sin\beta & 0 & \cos\beta \end{bmatrix} ,$$

$$M_\gamma = \begin{bmatrix} \cos\gamma & \sin\gamma & 0 \\ -\sin\gamma & \cos\gamma & 0 \\ 0 & 0 & 1 \end{bmatrix} \qquad \cdots (18)$$

As shown in Fig. 10, if the normal vector fixed to the object 4 as viewed from the robot wrist visual sensor co-ordinates system is expressed as $\vec{f} = (f_x^V, f_y^V, f_z^V)$, the following equation is obtained:

$$\vec{f} = f_x^V \vec{x}_v + f_y^V \vec{y}_v + f_z^V \vec{z}_v \qquad \cdots (19)$$

In order to express this vector in terms of the robot hand co-ordinates system, the vector is transformed into the following equation by expressing $\vec{x}_v$, $\vec{y}_v$, $\vec{z}_v$ by $\vec{x}_h$, $\vec{y}_h$, $\vec{z}_h$ in accordance with the equations (17) and (18):

$$\vec{f} = f_x^R \vec{x}_h + f_y^R \vec{y}_h + f_z^R \vec{z}_h \qquad \cdots (20)$$

where the normal vector as viewed from the robot hand co-ordinates system is expressed by $\vec{f} = (f_x^R, f_y^R, f_z^R)$.

Also, when a point on the object 4 is viewed from the visual sensor co-ordinate system, if the point is viewed as $\vec{X} = (x_v, y_v, z_v)$, the following equation is given:

$$\vec{X} = x_v \ \vec{x}_v + y_v \ \vec{y}_v + z_v \ \vec{z}_v \qquad \dots \ (21)$$

If the scaling ratios of the television camera of the robot wrist visual sensor 2 are expressed by $s_x$, $s_y$, $s_z$ with respect to the respective directions $\vec{x}_v$, $\vec{y}_v$, $\vec{z}_v$, $\vec{X}$ is viewed from the robot wrist co-ordinate system, and is expressed in accordance with the equation (16) as follows:

$$\vec{X} = L_x \ \vec{x}_h + L_y \ \vec{y}_h + L_z \ \vec{z}_h + s_x \ x_v \ \vec{x}_v +$$

$$s_y \ y_v \ \vec{y}_v + s_v \ z_v \ \vec{z}_v \qquad \dots \ (22)$$

$\vec{x}_v$, $\vec{y}_v$, $\vec{z}_v$ in this equation are represented by $\vec{x}_h$, $\vec{y}_h$, $\vec{z}_h$ in accordance with the equations (17) and (18) and are substituted thereby. Then, the following equation is given:

$$\vec{X} = x_h \ \vec{x}_h + y_h \ \vec{y}_h + z_h \ \vec{z}_h \qquad \dots \ (23)$$

If the equation (22) is thus transformed, the fixed point as viewed from the robot wrist co-ordinate system is positioned as $\vec{X} = (x_h, \ y_h, \ z_h)$.

As potential errors which would be generated when the robot wrist visual sensor 2 is mounted on the robot hand, errors $\Delta L_x$, $\Delta L_y$, $\Delta L_z$, $\Delta\alpha$, $\Delta\beta$, $\Delta\gamma$ would be considered with respect to $L_x$, $L_y$, $L_z$, $\alpha$, $\beta$, $\gamma$, respectively. When these errors would be present, the parameters in the equations (16) to (18) such as $L_x$ are replaced by ($L_x$ + $\Delta L_x$) and the like. In this case, the equations (16) and (17) may be rewritten as follows:

$$
\begin{pmatrix} \vec{O}_v \\ \vec{x}_v \\ \vec{y}_v \\ \vec{z}_v \end{pmatrix} = G \begin{pmatrix} \vec{O}_h \\ \vec{x}_h \\ \vec{y}_h \\ \vec{z}_h \end{pmatrix} \quad , \quad G = \begin{bmatrix} g_{11} & g_{12} & g_{13} & g_{14} \\ g_{21} & g_{22} & g_{23} & g_{23} \\ g_{31} & g_{32} & g_{33} & g_{34} \\ g_{41} & g_{42} & g_{43} & g_{44} \end{bmatrix}
$$

$$\dots \dots (24)$$

The element $g_{ij}$ of the matrix G includes errors $\Delta L_x$ and the like. If $g_{ij}$ is known, $\Delta L_x$, $\Delta L_y$, $\Delta L_z$, $\Delta \alpha$, $\Delta \beta$, $\Delta \gamma$ may be known by conducting suitable calculations.

Unless errors exist, the object 4 which resides in a position $\vec{X} = (x_v, y_v, z_v)$ and in a posture $\vec{f} = (f_x^V, f_y^V, f_z^V)$ as viewed through the robot wrist visual sensor 2 may reside in a position $\vec{X} = (x_h, y_h, z_h)$ and a posture $\vec{f} = (f_x^R, f_y^R, f_z^R)$ as viewed through the robot hand co-ordinates. However, actually, due to the errors such as $\Delta L_x$, it is measured that the object 4 resides in a position $\vec{X}' = (x_h', y_h', z_h')$ and in a posture $\vec{f}' = (f_x^{R'}, f_y^{R'}, f_z^{R'})$. By these deviations of the position and posture, the equations (16) and (17) are deformed into the equation (24). Accordingly, by measuring the deviations in position and posture, it is possible to determine the elements $g_{ij}$ of the matrix G. If the elements $g_{ij}$ are known, the errors such as $\Delta L_x$ may be obtained.

The construction and operation of the specific embodiment will now be described with reference to Figs. 8 and 11.

The robot 3 is moved close to the fixed point on the object 4 in accordance with the command signals of the position and posture from the robot control unit 7 (step 201). Thereafter, the image information is inputted into the robot wrist visual sensor 2 and fed to the image processor 8 (step 202). The position and posture $\vec{X}'$ and $\vec{f}'$ are measured in the image processor 8 (step 203).

On the other hand, the position and posture of the fixed point on the object is inputted in advance in the parameter calculator 9 (step 204). On the basis of the wrist position and posture information (step 205) from the robot control unit 7, the position and posture $\vec{X}$ and $\vec{f}$ of the fixed point as viewed from the robot wrist visual sensor co-ordinates system are calculated in accordance with the equations (16), (17) and (18) (step 206). Upon the calculation of $\vec{X}$, $\vec{f}$, it is made on the basis of that there is no error in the parameters whereas the $\vec{X}'$, $\vec{f}'$ measured by the robot wrist visual sensor 2 include the parameter errors. Therefore, the vectors $\vec{X}$ and $\vec{X}'$ and $\vec{f}$ and $\vec{f}'$ are different from each other. Then, if the matrix G in the equation (24) is obtained in accordance with $\vec{X}'$, $\vec{f}'$ (step 207), the parameters included in the respective components of the matrix G include errors. Accordingly, by comparing the parameters in the equations (16) and (17) to the parameters in the matrix G, it is possible to obtain the parameter errors (step 208).

As described above, in accordance with the present invention, in a co-ordinate system correction apparatus including visual sensor means for detecting a position and/or posture of an object, the apparatus comprises means for setting a co-ordinate system in at least one of a robot body and a robot wrist, setting a proper co-ordinate system in the visual sensor means and detecting the position and/or posture of the object in the co-ordinate system in the visual sensor means, and parameter storing means for storing parameters determining a relationship between the co-ordinate system of the visual sensor means and at least one of the co-ordinate systems of the robot body and the robot wrist. By using the co-ordinate transformation parameters, the position and/or posture of the object in the co-ordinate system of the visual sensor means are transformed into the co-ordinate system of the robot wrist and the co-ordinate system of the robot body, or otherwise into the co-ordinate system of the robot body and further transformed into the co-ordinate system of the robot body. Accordingly, the respective structural elements such as the visual sensor means are operated by the respective co-ordinate systems. Thus, by the operation in a desired condition, it is advantageous that the obtained data are effectively utilized. Also, it is easy to carry out the co-ordinate transformation with the parameters. By storing the parameters in the parameter storing means, it is possible to always correspond to the transformation of the data from the visual sensor means.

Furthermore, according to the invention, by preparing and using a plurality of parameters, it is possible to correspond to the case where the visual sensor is changed in position and another visual sensor is used.

Also, it is possible to construct the robot system so as to command the robot in a standardized manner with a simple robot language.

Moreover, in accordance with the present invention, since three-dimensional mounting parameters generated when the visual sensor is fixed to the robot co-ordinates system may be obtained by moving the robot, the following meritorious advantages can be obtained.

(1) By obtaining the three-dimensional mounting parameters and using them, it is possible to handle with high accuracy a three-dimensional object taking any position and posture as well as a planar object by means of the visual sensors.

(2) Also, the mounting parameters may be obtained simply by measuring the object while moving the robot. Accordingly, the correction work can be made more readily than the measurement of the mounting parameters with a measuring tools. This leads to enhancement in accuracy of the robot operation and in efficiency.

**0151417**

It is apparent that the present invention is not limited to the embodiments shown but various changes or modification are possible for those skilled in the art.

- 30 -

0151417

CLAIMS

1.      A robot system having a visual sensor comprising:

a robot having a first co-ordinates system provided in at least one of a robot body and a robot hand;

a visual sensor device having a second co-ordinates system for detecting a position and/or posture of an object;

means for measuring parameters determining a relationship between said second co-ordinates system and said first co-ordinates system;

means for storing said parameters measured by means of said measuring means; and

means for transforming a detected position and/or posture information of the object in said second co-ordinates system into an information in said first co-ordinates system through said measured parameters.

2.      A robot system as claimed in Claim 1, wherein said parameters for co-ordinates transformation includes a plurality of sets of parameters each set corresponding to a respective visual sensor devices whereby a corresponding co-ordinates transformation parameter set may be assigned even if the visual sensor device is replaced by another visual sensor device.

3.      A robot system as claimed in Claim 2, wherein said co-ordinates transformation parameter sets include one for a visual sensor device mounted on said robot hand and one for a visual sensor device mounted fixedly

0151417

on a base on which said robot is installed.

4.      A robot system as claimed in Claim 1, wherein said co-ordinates transformation parameters are determined by a matrix.

5.      A robot system as claimed in Claim 1, wherein said first co-ordinates system is established in said robot hand, and after an information in said second co-ordinates system is transformed into an information in said first co-ordinates system, said transformed information is further transformed into an information in a co-ordinates system of said robot body.

6.      A robot system as claimed in Claim 1, wherein said parameter measuring means comprises:

first means for moving said robot to a fixed point on the fixed object to be measured with said robot being kept in a constant position and posture, and for calculating a position and posture of said robot hand moved said fixed point,

second means for measuring a position and posture of said fixed point with a visual sensor device, and

third means for calculating co-ordinates transformation parameters by means of data obtained by said first means and of data obtained by said second means.

7.      A robot system as claimed in Claim 6, wherein said visual sensor device includes a wrist visual sensor device mounted on said robot hand.

8.      A robot system as claimed in Claim 1, wherein said parameter measuring means comprises:

first means for moving said robot to a commanded position and for calculating a position and posture in said commanded position,

second means for measuring a position and posture of said robot after movement through said visual sensor device, and

third means for calculating co-ordinates transformation parameters by means of said calculation result obtained by said first means and of said measurement result obtained by said second means.

9.     A robot system as claimed in Claim 8, wherein said visual sensor device includes a stationary visual sensor device fixed to a base on which said robot is installed.

10.     A co-ordinates system correction apparatus comprising:

a robot having a first co-ordinates system provided in at least one of a robot body and a robot hand;

a visual sensor device mounted on a distal end portion of said robot or a base on which said robot is installed, said visual sensor device having a second co-ordinates system and a function for measuring a position and/or a posture of an object;

visual data storing means for storing a position and/or a posture information measured by said visual sensor device,

0151417

robot data storing means for storing data representing a position and/or a posture of said robot in said first co-ordinates system when said visual data are measured;

parameter measuring means for measuring parameters giving a relationship between said first co-ordinates system and said second co-ordinates system by means of said visual data storing means and said robot data storing means;

parameter storing means for storing said measured parameters; and

means for transforming an information of a position and/or a posture of an object in said second co-ordinates system into an information in said first co-ordinates system by using said parameters.

11.      A method for correcting a robot visual sensor co-ordinates system for a robot system including a robot, a stationary visual sensor device fixed close to said robot, an image processor for processing image data from said sensor device, an error calculating device and a robot control unit for controlling and processing said components and data, said method comprising the steps of:

moving said robot to a commanded position under a control of said robot control unit,

measuring a position and posture of said robot in a stationary visual sensor co-ordinates system by means of said stationary visual sensor device and said image processor after movement of said robot,

calculating a commanded position and posture of said robot in said stationary visual sensor co-ordinates system by means of said error calculating device,

calculating errors in mounting said stationary visual sensor device from a deviation between said calculated and said measured position and posture of said robot, and

correcting the deviation between a robot co-ordinates system and said stationary visual sensor co-ordinates system, which caused by said mounting errors.

12. A method for correcting a robot wrist visual sensor co-ordinates system for a robot system including a robot, a sensor device mounted on a robot wrist, an image processor for processing image data from said wrist sensor device, a mounting error measuring device and a robot control unit for controlling and processing said components and data, said method comprising the steps of:

moving said robot to a commanded point close to a fixed point of a stationary object to be measured· fixed in a constant position and posture under a control of said robot control unit,

calculating a position and posture of said robot hand,

measuring a position and posture of said fixed point in a robot wrist visual sensor co-ordinates system by means of said robot wrist visual sensor device and said image processor,

calculating mounting errors of said robot wrist visual sensor from said measured and said calculated position and posture of said robot wrist by means of said mounting error calculating device, and

correcting a deviation between said robot wrist co-ordinates system and said robot wrist visual sensor co-ordinates system.

FIG. 1

## FIG. 2

FIG. 3

FIG. 4

FIG. 5

FIG. 6

FIG. 7

IMAGE INPUT

MOVE ROBOT TO A DESIRED POSITION $\vec{X}$ AND POSTURE $\vec{f}$

MEASURE POSITION $\vec{X''}$ AND POSTURE $\vec{f''}$ OF ROBOT VIEWED FROM STATIONARY SENSOR

OBTAIN CALCULATED POSITION $\vec{X'}$ AND POSTURE $\vec{f'}$ OF ROBOT IN STATIONARY SENSOR CO-ORDINATES SYSTEM

CORRECT PARAMETERS ON THE BASIS OF CALCULATED PARAMETER ERRORS

CALCULATE PARAMETER ERRORS FROM DEVIATIONS BETWEEN $\vec{X'}$ AND $\vec{X''}$, AND BETWEEN $\vec{f'}$ AND $\vec{f''}$

0151417

FIG. 8

FIG. 9

FIG. 10

FIG.11

8/8

**IMAGE INPUT** — 2

202

**POSITION $\vec{X'}$ AND NORMAL VECTOR $\vec{f'}$ OF THE FIXED POINT ON OBJECT ARE MEASURED IN WRIST VISUAL SENSOR CO-ORDINATES SYSTEM** — 8

203

7

**MOVE ROBOT CLOSE TO THE FIXED POINT ON OBJECT**

201

**CALCULATE HAND POSITION AND POSTURE**

205

**INPUT POSITION AND POSTURE OF THE FIXED POINT ON THE OBJECT IN ADVANCE.** — 9

204

206

**CALCULATE POSITION AND POSTURE OF THE FIXED POINT ON THE OBJECT AS VIEWED THROUGH WRIST VISUAL SENSOR CO-ORDINATES SYSTEM**

207

**CALCULATE MATRIX G**

208

**CALCULATE PARAMETER ERRORS**

209

**CORRECT PARAMETERS ON THE BASIS OF CALCULATED PARAMETER ERRORS**

| Category | Citation of document with indication, where appropriate, of relevant passages | Relevant to claim | CLASSIFICATION OF THE APPLICATION (Int Cl 4) |
|---|---|---|---|
| A | MINI-MICRO SYSTEMS, vol. 17, no. 9, July 1984, pages 127-135, Denver, Colorado, US; D. EDSON: "Vision systems for bin-picking robots increase manufacturing options" <br> * Pages 127-135 * | 1 | |
| A | LE NOUVEL AUTOMATISME, vol. 26, nos. 1/2, January/February 1981, pages 53-60; J.-N. FOULC et al.: "Initiation à la robotique. 4-équipement sensoriel et de préhension des manipulateurs" <br> * Pages 53-60 * | 1 | |
| | | | TECHNICAL FIELDS SEARCHED (Int Cl 4) |

The present search report has been drawn up for all claims

| Place of search <br> THE HAGUE | Date of completion of the search <br> 26-04-1985 | Examiner <br> RESSENAAR J.P. |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 402 053 (KELLEY) * Whole document * | 1-12 | G 05 B 19/18 B 25 J 13/08 |
| Y | US-A-4 412 293 (KELLEY) * Whole document * | 1-12 | |
| Y | GB-A-2 110 427 (TOKICO) * Whole document * | 1-12 | |
| A | COMPUTER, vol. 15, no. 12, December 1983, pages 42-54, Long Beach, California, US; E.L. HALL et al.: "Measuring curved surfaces for robot vision" * Pages 42-54 * | 1 | |
| A | E.D.N. ELECTRICAL DESIGN NEWS, vol. 27, no. 20, October 1982, pages 79-86, Boston, Massachusetts, US; E.R. TEJA: "Imaging technology helps robot vision grow, but applications are still rudimentary" * Pages 79-86 * | 1 | **TECHNICAL FIELDS SEARCHED (Int. Cl.4)** G 05 B 19/18 B 25 J 13/08 |
| A | MINI-MICRO SYSTEMS, vol. 15, no. 11, November 1982, pages 201-211, Denver, Colorado, US; E. LUNDQUIST: "Robotic vision systems eye factory applications" * Pages 201-211 * | 1 | |

-/-

The present search report has been drawn up for all claims

| Place of search | Date of completion of the search | Examiner |
|---|---|---|
| THE HAGUE | 26-04-1985 | RESSENAAR J.P. |